# EUROPÄISCHE PATENTSCHRIFT

(11) **EP 1 102 389 B1**
(45) Veröffentlichungstag und Bekanntmachung des Hinweises auf die Patenterteilung: **09.05.2007**
(21) Anmeldenummer: 00122507.7
(22) Anmeldetag: 14.10.2000
(51) Int. Cl.: H02M 7/162, H02H 7/125, H02H 7/127, H02M 1/00, H02H 11/00

(54) **Schaltungsanordnung zur Gleichrichtung einer Wechselspannung oder mehrerer Wechselspannungen**
Circuit for rectifying an alternating voltage or several alternating voltages
Circuit pour redresser une tension alternative ou plusieurs tensions alternatives

(30) Priorität: 16.11.1999 DE 19954974
(43) Veröffentlichungstag der Anmeldung: 23.05.2001
(73) Patentinhaber: ROBERT BOSCH GMBH, 70442 Stuttgart (DE)
(72) Erfinder: Labitzke, Herbert, 71706 Markgroeningen (DE); Winkel, Hans-Heinrich, 31311 Uetze (DE)

(56) Entgegenhaltungen:
- DE-A- 1 763 174
- DE-A- 2 005 280
- DE-A- 3 841 610
- US-A- 3 292 071
- US-A- 4 544 978
- PATENT ABSTRACTS OF JAPAN vol. 005, no. 133 (E-071), 25. August 1981 (1981-08-25) & JP 56 068273 A (HITACHI LTD), 8. Juni 1981 (1981-06-08)
- ZACH F.: 'Leistungselektronik', SPRINGER, WIEN, NEW YORK, ISBN 3-211-81503-3 * Seiten 188-194 *

## Beschreibung

Die Erfindung geht aus von einer Schaltungsanordnung zur Gleichrichtung von Wechselspannungen, insbesonders für eine Gleichrichterbrücke für einen Wechselspannungsgenerator in einem Kraftfahrzeug nach der Gattung des Hauptanspruchs.

### Stand der Technik

Da die Erzeugung von elektrischer Energie üblicherweise mit Hilfe von Wechselspannungsgeneratoren erfolgt und da eine Vielzahl von elektrischen Verbrauchern Gleichspannung benötigt, ist es bekannt, die Wechselspannung mit Hilfe von Gleichrichterelementen gleichzurichten. In Kraftfahrzeugbordnetzen wird die elektrische Energie i. a. mit Hilfe von Drehstromgeneratoren erzeugt, die Gleichrichtung der Spannung erfolgt mit Hilfe von Gleichrichterbrücken, die üblicherweise sechs Dioden oder sechs Zenerdioden umfassen. Es ist jedoch auch bekannt, anstelle von Dioden oder Zenerdioden ansteuerbare Gleichrichterelemente einzusetzen, die mit Hilfe von Steuermitteln angesteuert werden. Der Einsatz einer gesteuerten Gleichrichterbrücke wird beispielsweise in er US-PS 4 825 139 beschrieben. Dabei werden wahlweise MOS-Feldeffekttransistoren als Gleichrichterelemente eingesetzt. Mit Hilfe der bekannten gesteuerten Gleichrichterbrücke soll eine. Generatorregelung erzielt werden, die auch bei kleinen Drehzahlen eine Generatorausgangsspannung ermöglicht, die zur Versorgung des Fahrzeugbordnetzes geeignet ist.

Aus der DE-OS 20 05 280 ist ein Gleichrichtergerät zum Laden von Akkumulatorenbatterien unter Verwendung von steuerbaren Gleichrichterelementen, insbesondere Thyristoren sowie einem die Gleichrichterelemente steuernden Steuergerät bekannt. Dieses bekannte Gleichrichtergerät hat den Vorteil, dass Verpolungen beim Anschluss keine Beschädigungen verursachen, da das Steuergerät solche verpolte Anschlüsse erkennt und entsprechende Ansteuersignale an die steuerbaren Gleichrichterelemente abgibt und dieses dadurch sperrt und vor einer Zerstörung bewahrt. Die Anordnung der Gleichrichterelemente bzw. der gesteuerten Gleichrichterelemente ist so gewählt, dass plusseitig die steuerbaren Gleichrichterelemente liegen und masseseitig die eine Diodenfunktion aufweisenden Gleichrichterelemente angeschlossen sind.

Aus der DE-OS 17 63 174 und der US-PS 4,544,978 sind weitere Gleichrichteranordnungen bekannt, die im Wesentlichen die selbe Beschaltung aufwiesen wie die aus der DE-OS 20 05 280 bekannten Gleichrichtergeräte. Der aus der US-PS 4,544,978 bekannte Gleichrichter wird bspw. in einem Kraftfahrzeug zur Gleichrichtung der von einem Drehstromgenerator gelieferten Ausgangsspannung eingesetzt.

### Vorteile der Erfindung

Die erfindungsgemäße Schaltungsanordnung zur Gleichrichtung einer Wechselspannung oder mehrerer Wechselspannungen hat gegenüber dem Stand der Technik den Vorteil, daß ein zuverlässiger Verpolschutz erhalten wird, der sicherstellt, daß bei einem verpolten Anschluß einer äußeren Spannungsquelle (Netzwerk) kein folgenreicher Kurzschluß auftreten kann, wodurch in vorteilhafter Weise sichergestellt wird, daß weder der Gleichrichter, noch die verpolt angeschlossene äußere Spannungsquelle oder umliegende Komponenten in Folge des sonst vorliegenden Kurzschlusses geschädigt werden.

Erzielt werden diese Vorteile durch eine Gleichrichteranordnung mit der Merkmalskombination des Anspruchs 1. Diese Gleichrichteranordnung setzt sich zusammen aus der Parallelschaltung von mindestens zwei Serienschaltungen, die sich wiederum aus zwei gleichsinnig verschalteten Gleichrichterelementen ergeben. Dabei werden die Wechselspannungspotentiale der gleichzurichtenden Wechselspannung(en) jeweils zwischen die zwei gleichsinnig in Serie liegenden Gleichrichterelementen eingespeist, wobei das Gleichrichterelement für den oberen Bereich dieser Serienschaltung eine Diode oder Zenerdiode und das Gleichrichterelement für den unteren Teil ein Thyristor ist. Dabei ist das Gate des Thyristors direkt mit der Kathode der Diode bzw. Zenerdiode, also dem Gleichrichter-Plus-Potential verbunden. Im Normalbetrieb, also bei positiver Gatespannung, arbeitet der Thyristor wie eine herkömmliche Diode. Wird jedoch die Spannung am Gate negativ, beispielsweise durch Aufschalten einer negativen Netzwerkspannung (Verpolung), verhindert der Thyristor den Stromfluß durch den Gleichrichter und somit dessen mögliche Zerstörung und sonstige Folgeschäden. Alternativ wird dieser Verpolschutz erhalten, indem die Gateelektrode des jeweiligen Thyristors durch ein zusätzliches Steuergerät auf einer vorgebbaren Spannung gehalten wird.

Besonders vorteilhaft wird die Erfindung in Verbindung mit einem Drehstromgenerator in einem Kraftfahrzeug eingesetzt, die Schaltung ist dann so aufgebaut, daß die oberen Gleichrichterelemente als Dioden oder Zenerdioden ausgestaltet sind, während die unteren drei Gleichrichterelemente Thyristoren sind, deren Gateanschlüsse entweder gemeinsam mit den Kathoden der Gleichrichterdioden verbunden sind oder mit Hilfe eines Steuergerätes auf Vorgebbarpotential gehalten werden. Die einzelnen Gateanschlüsse können dann vorteilhafterweise getrennt oder gemeinsam vom Steuergerät angesteuert werden. Das Einschalten und Gesperrthalten dieser Thyristoren durch das Steuergerät erfolgt jeweils gezielt. Entsprechend einer gewünschten Zusatzfunktion lassen sich weitere Vorteile der Erfindung erzielen, diese weiteren Vorteile sind in den Unteransprüchen näher angegeben. Beispielsweise kann neben dem Verpolungsschutz eine gezielte Unterbrechung der Versorgung des Netzwerkes oder einzelner Teile der Netzwerke erzielt werden, es ist dann ein gezielter Leerlauf des Gleichrichters durch gezieltes Gesperrthalten möglich. Weiterhin läßt sich in vorteilhafter Weise ein Schutz des Gleichrichters vor vom Netzwerk verursachten Spannungsspitzen realisieren. Durch optimale Anpassung an die Erfordernisse läßt sich eine besonders vorteilhafte Ausgestaltung der Beschaltung des Steuergerätes erzielen.

### Zeichnung

Zwei Ausführungsbeispiele der Erfindung sind in den Figuren 1 und 2 der Zeichnung dargestellt und werden in der nachfolgenden Beschreibung näher erläutert. In Figur 3 sind einzelne Anschlüsse näher bezeichnet. Beide Ausführungsbeispiele zeigen eine Schaltung zum Verpolungsschutz mittels halbaktivem Gleichrichter bei einer Drehstrom-Gleichrichterbrücke, die Erfindung ist aber nicht auf Drehstrom-Gleichrichterbrücken eingeschränkt, sondern kann grundsätzlich auch bei der Gleichrichtung von einer Wechselspannung, zweier Wechselspannungen oder für Mehrphasen-Wechselspannungssysteme mit Hilfe der Parallelschaltung entsprechend vieler Serienschaltungen, die gemäß Hauptanspruch aus einer Diode und einem Thyristor bestehen und verschaltet sind, angewendet werden.

### Beschreibung

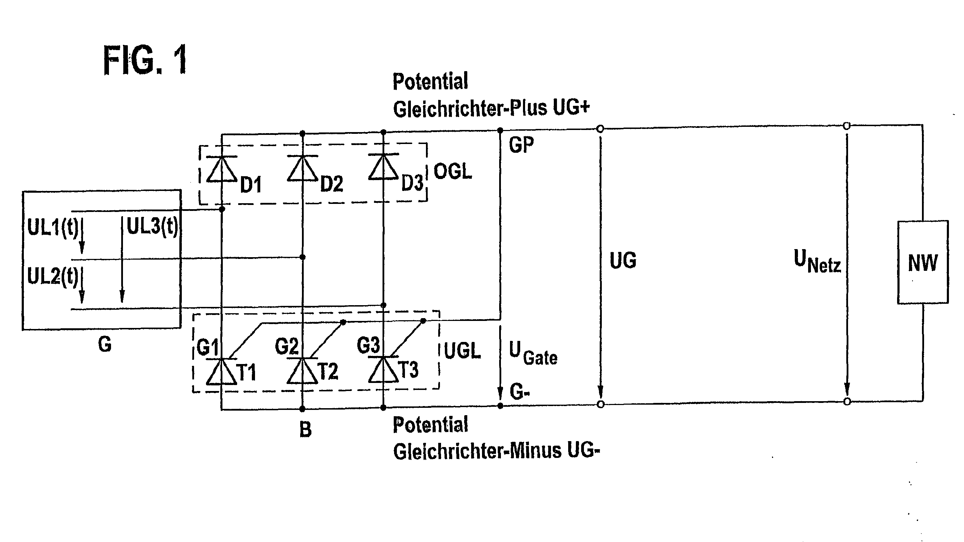

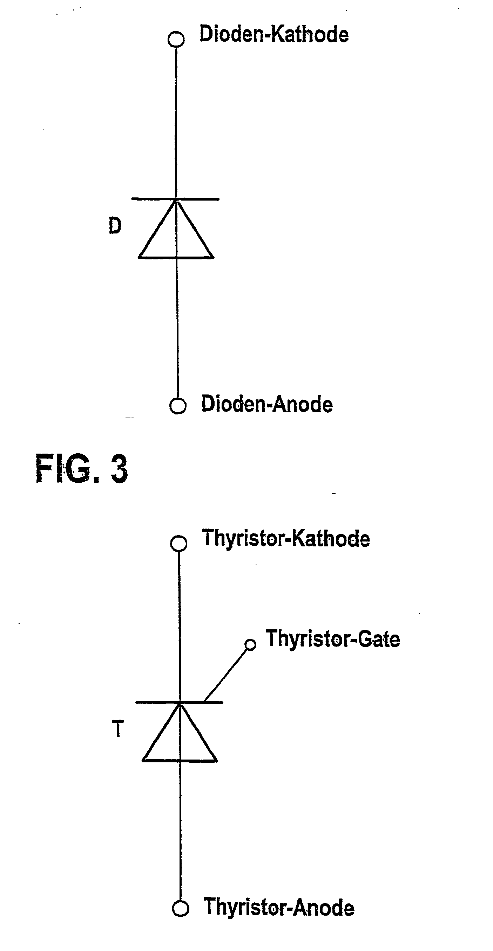

In Figur 1 ist ein erstes Ausführungsbeispiel der Erfindung dargestellt. Dieses Beispiel bezieht sich auf die Gleichrichtung der vom Drehstromgerator G gelieferten Spannungen UL1(t), UL2 (t), UL3 (t). Diese Spannungen werden in bekannter Weise der Gleichrichterbrücke B zugeführt. Die Gleichrichterbrücke B umfaßt die sogenannten oberen Gleichrichterelemente OGL die durch die Dioden D1, D2 und D2 gebildet wird sowie die unteren Gleichrichterelemente UGL, die die drei Thyristoren T1, T2 und T3 umfaßt. Die Verschaltung der Gleichrichterbrücke B ist so, daß die Kathoden der Dioden D (Fig 3) miteinander verbunden sind und zum Gleichrichter-Plusanschluß GP führen, an dem das Gleichrichterpotential UG+ liegt. Die Anoden der drei Dioden D1, D2 und D3 (D in Fig 3) sind jeweils mit den Kathoden der zugehörigen Thyristoren T1, T2 und T3 (T in Fig 3) verbunden. Die drei Thyristor-Gateanschlüsse G1, G2, und G3 sind mit dem Gleichrichter-Plusanschluß verbunden. Die Generatorspannungen UL1(t), UL2(t), UL3(t) werden den Verbindungspunkten zwischen den Dioden und den zugehörigen Thyristoren zugeführt. Anodenseitig sind die Thyristoren T1, T2 und T3 miteinander verbunden, der zugehörige Gleichrichteranschluß ist mit G- bezeichnet, das zugehörige Potential ist das Gleichrichter-Minuspotential UG-. Zwischen UG+ und UG- liegt somit die Spannung UG, die dem zu versorgenden Netzwerk NW, beispielsweise den Fahrzeugverbrauchern einschließlich der Batterie zugeführt wird. Die am Netzwerk NW anliegende Spannung ist mit U_{Netz} bezeichnet.

Mit der in Figur 1 dargestellten Schaltungsanordnung der Gleichrichterbrücke B werden die erfindungsgemäßen Vorteile bei der Gleichrichtung der Generatorspannung erzielt. Es läßt sich also ein reversibler, zerstörungsfreier Verpolungsschutz erzielen, indem der Gate-Anschluß G1, G2 und G3 im Normalbetrieb mit dem Gleichrichter-Plus-Potential verbunden wird. Im Normalbetrieb arbeiten die im unteren Bereich des Gleichrichters B verwendeten Thyristoren, d. h. bei positiver Spannung UG wie herkömmliche Dioden, da die Gatespannung in diesem Fall positiv ist. Wird jedoch die Spannung U_{Gate} negativ, beispielsweise durch Aufschalten einer negativen Netzwerkspannung U_{Netz} (Batterie des Fahrzeugs), wird U_{Gate} negativ. In diesem Fall verhindern die Thyristoren T1, T2 und T3 den Stromfluß durch den Gleichrichter und somit dessen mögliche Zerstörung. Damit sind auch weitere Folgeschäden, insbesondere durch Stromwärme eines verpolten herkömmlichen Gleichrichters mit sechs Dioden, ausgeschlossen.

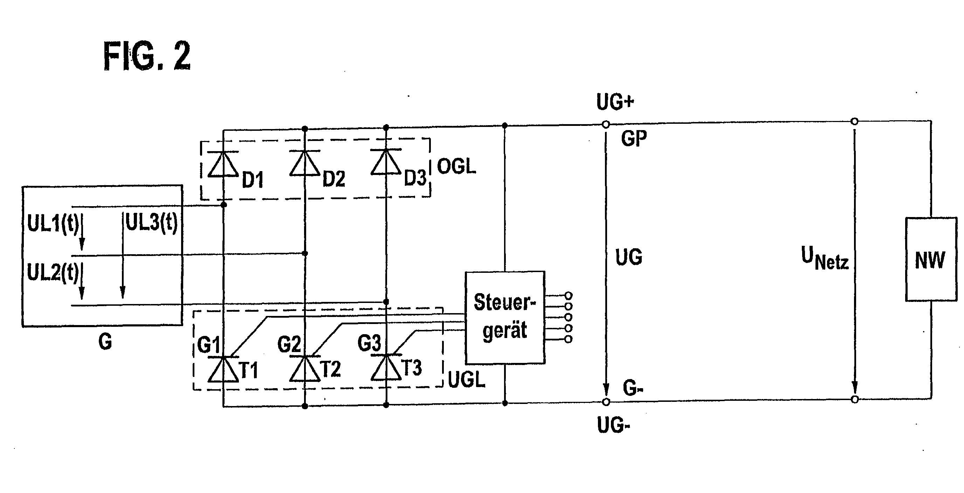

Ein weiteres Ausführungsbeispiel der Erfindung ist in Figur 2 dargestellt. Dieses Ausführungsbeispiel unterscheidet sich vom Ausführungsbeispiel nach Figur 1 lediglich dadurch, daß die Gateanschlüsse der Thyristoren T1, T2 und T3 auf ein Steuergerät SG führen, wobei die Anschlüsse beispielsweise getrennt zum Steuergerät geführt werden können, wodurch es möglich ist, daß das Steuergerät das Gatepotential der einzelnen Thyristoren unterschiedlich beeinflußt. Das Steuergerät liegt an der Gleichrichterspannung UG, aus dieser Spannung wird die Versorgungsspannung für das Steuergerät gebildet, wobei Steuergeräte intern ggf. Spannungswandler besitzen. Über zusätzliche Anschlüsse des Steuergerätes werden dem Steuergerät Informationen zugeführt, die das Steuergerät auswerten kann und bei der Aussteuerung der Thyristoren berücksichtigen kann.

Die in Figur 2 dargestellte Drehstrom-Gleichrichterbrücke mit Zusatzfunktionen, die mittels eines vom Steuergerät aktivierten unteren Gleichrichterbereichs arbeitet, kann folgende Zusatzfunktionen realisieren: Die im unteren Bereich des Gleichrichters liegenden drei Thyristoren T1, T2 und T3 werden durch das Steuergerät SG jeweils gezielt eingeschaltet bzw. jeweils gezielt gesperrtgehalten. Entsprechend der gewünschten Zusatzfunktion (Verpolungsschutz, gezielte Unterbrechung der Versorgung des Netzwerkes, d. h. gezielter Leerlauf des Gleichrichters oder gezieltes Gesperrthalten, Schutz des Gleichrichters vor vom Netzwerk verursachten Spannungsspitzen usw.) ist die Schaltung des Steuergeräts aufzubauen.

Durch Verbindung des Steuergeräts mit dem Motorsteuergerät oder sofern das Steuergerät das Motorsteuergerät selbst ist, kann durch entsprechende Ansteuerung der Thyristoren eine Entlastung des Verbrennungsmotors oder eine Verbrauchsreduzierung des Kraftfahrzeugs erhalten werden, da solche Ansteuerungen dazu führen, daß der Generator weniger Leistung abgibt und damit den Motor auch weniger belastet.

Die Ausführungsbeispiele der Erfindung wurden speziell für die Gleichrichtung der Ausgangspannung eines Drehstromgenerators in einem Kraftfahrzeug beschrieben, prinzipiell kann eine solche Gleichrichterbrücke zur Gleichrichtung jedes Drehstroms innerhalb des für die eingesetzten Halbleiter zulässigen Bereiches angesetzt werden. Prinzipiell kann auch eine einfache Wechselspannung mit Hilfe der Parallelschaltung zweier Serienschaltungen, die wie ausgeführt aus einer Diode und einem Thyristor bestehen und verschaltet sind, durchgeführt werden. Entsprechendes gilt für Zwei- und Mehrspannungssysteme.

## Patentansprüche

1. Schaltungsanordnung zur Gleichrichtung einer Wechselspannung oder mehrerer Wechselspannungen, wobei sich die Schaltungsanordnung aus gleichsinnig parallel geschalteten Serienschaltungen ergibt, die wiederum aus gleichsinnig in Serie geschalteten Gleichrichterelementen bestehen, wobei stets das obere Gleichrichterelement, das auf einem Gleichrichter-Pluspotential (UG+) liegt, eine Diodenfunktion hat, bzw. wenigstens eine Diode ist und stets das andere untere Gleichrichterelement, das auf einem Gleichrichter-Minuspotential (UG-) liegt, steuerbar ist, wobei dieses steuerbare Gleichrichterelement wenigstens ein Thyristor (T1, T2, T3) ist und die Wechselspannungspotentiale der gleichzurichtenden Wechselspannung oder Wechselspannungen am jeweiligen Verbindungpunkt der gleichsinnig in Serie geschalteten Gleichrichterelemente eingespeist werden, **dadurch gekennzeichnet, dass** ein Gateanschluß (G) des wenigstens einen Thyristors (T1, T2, T3) zum Schutz vor einem verpolten Anschluss einer äußeren Spannungsquelle oder eines Netzwerks direkt mit einem Gleichrichter-Plusausgang (GP) des Gleichrichterelements mit Diodenfunktion verbunden ist.

2. Schaltungsanordnung zur Gleichrichtung einer Wechselspannung oder mehrerer Wechselspannungen nach Anspruch 1, **dadurch gekennzeichnet, dass** die Dioden-Kathoden den Gleichrichter-Plusausgang (GP) und die Thyristor-Anoden den Gleichrichter-Minusausgang (G-)bilden.

3. Schaltungsanordnung zur Gleichrichtung einer Wechselspannung oder mehrerer Wechselspannungen nach Anspruch 1 oder 2, **dadurch gekennzeichnet, dass** die Gleichrichterelementebei einem Dreiphasenspannungssystem, eine Brücke bilden, bestehend aus drei gleichsinnig parallel geschalteten Serienschaltungen.

4. Schaltungsanordnung zur Gleichrichtung einer Wechselspannung oder mehrerer Wechselspannungen nach Anspruch 1 oder 2, **dadurch gekennzeichnet, dass** die Gleichrichterelemente bei einem Dreiphasenspannungssystem bei einem Drehstromgenerator in einem Kraftfahrzeug, eine Brücke bilden, bestehend aus zwei gleichsinnig parallel geschalteten Serienschaltungen.

## Claims

1. Circuit arrangement for rectifying an AC voltage or a plurality of AC voltages, the circuit arrangement being produced from series circuits which are connected in parallel in the same sense and in turn comprise rectifier elements which are connected in series in the same sense, the upper rectifier element which is at a rectifier positive potential (UG+) always having a diode function or being at least one diode and the other, lower rectifier element which is at a rectifier negative potential (UG-) always being able to be controlled, this controllable rectifier element being at least one thyristor (T1, T2, T3), and the AC voltage potentials of the AC voltage or voltages to be rectified being fed in at the respective connecting point between the rectifier elements which are connected in series in the same sense, **characterized in that** a gate connection (G) of the at least one thyristor (T1, T2, T3) is directly connected to a rectifier positive output (GP) of the rectifier element having a diode function for the purpose of protection from a connection of an external voltage source or a network which has undergone polarity reversal.

2. Circuit arrangement for rectifying an AC voltage or a plurality of AC voltages according to Claim 1, **characterized in that** the diode cathodes form the rectifier positive output (GP) and the thyristor anodes form the rectifier negative output (G-).

3. Circuit arrangement for rectifying an AC voltage or a plurality of AC voltages according to Claim 1 or 2, **characterized in that**, in a three-phase voltage system, the rectifier elements form a bridge comprising three series circuits which are connected in parallel in the same sense.

4. Circuit arrangement for rectifying an AC voltage or a plurality of AC voltages according to Claim 1 or 2, **characterized in that**, in the case of a three-phase voltage system in a three-phase generator in a motor vehicle, the rectifier elements form a bridge comprising two series circuits which are connected in parallel in the same sense.

## Revendications

1. Circuit pour redresser une tension alternative ou plusieurs tensions alternatives, le circuit découlant de montages en série connectés en parallèle dans le même sens, eux-mêmes constitués d'éléments de redresseur commutés en série dans le même sens, l'élément de redresseur supérieur, situé sur un potentiel Plus du redresseur (UG+), ayant toujours une fonction de diode ou étant au moins une diode et l'autre élément de redresseur inférieur, situé sur le potentiel Moins du redresseur (UG-) pouvant être toujours commandé, cet élément de redresseur pouvant être commandé étant au moins un thyristor (T1, T2, T3) et les potentiels de la tension alternative ou des tensions alternatives à redresser étant alimentés sur le point de liaison respectif des éléments de redresseur connectés en série dans le même sens,
**caractérisé en ce que**
le raccord de grille (G) de l'au moins un thyristor (T1, T2, T3) est relié directement à une sortie Plus de l'élément de redresseur ayant une fonction de diode pour protéger contre un branchement avec inversion de polarité d'une source de tension extérieure ou d'un réseau.

2. Circuit pour redresser une tension alternative ou plusieurs tensions alternatives selon la revendication 1,
**caractérisé en ce que**
les cathodes des diodes constituent la sortie Plus du redresseur (GP) et les anodes du thyristor la sortie Moins du redresseur (G-).

3. Circuit pour redresser une tension alternative ou plusieurs tensions alternatives selon la revendication 1 ou la revendication 2,
**caractérisé en ce que**
les éléments de redresseur, dans un système de tension triphasé, forment un pont constitué de trois circuits en série commutés en parallèle dans le même sens.

4. Circuit pour redresser une tension alternative ou plusieurs tensions alternatives selon la revendication 1 ou la revendication 2,
**caractérisé en ce que**
les éléments de redresseur, dans un système de tension triphasé avec un alternateur triphasé dans un véhicule automobile, forment un pont constitué de deux circuits en série connectés en parallèle dans le même sens.
